# EUROPÄISCHE PATENTANMELDUNG

(11) **EP 1 555 329 A1**
(43) Veröffentlichungstag der Anmeldung: **20.07.2005**
(21) Anmeldenummer: 04000775.9
(22) Anmeldetag: 15.01.2004
(51) Int. Cl.: C21D 7/06, C21D 7/04, C21D 7/08, B24C 3/04, F01D 5/28

(54) **Bauteil mit Druckeigenspannungen, Verfahren zur Herstellung und Vorrichtung zur Erzeugung von Druckeigenspannungen**

(71) Anmelder: SIEMENS AKTIENGESELLSCHAFT, 80333 München (DE)
(72) Erfinder: Walter, David, 45481 Mülheim (DE)

(57) **Zusammenfassung**

Oberflächenhärtungsverfahren nach dem Stand der Technik sind oft nicht ausreichend genug hinsichtlich der Materialanforderungen durch die lokal unterschiedlichen Betriebsspannungen.

Das erfindungsgemäße Verfahren beinhaltet das lokale, angepasste und kontrollierte Einbringen von Druckeigenspannungen.

## Beschreibung

Die Erfindung betrifft ein Bauteil mit Druckeigenspannungen gemäss des Oberbegriffs des Anspruch 1 und ein Verfahren zur Herstellung eines Bauteils mit Druckeigenspannungen gemäß Anspruch 10 sowie eine Vorrichtung für die Erzeugung von Druckeigenspannungen gemäß Anspruch 42.

In mechanisch hoch beanspruchten Bauteilen werden oft Druckeigenspannungen eingebracht, damit die Bauteile erhöhte Spannungen ertragen können. Teilweise wird dies bei den tannenbaumähnlich ausgeformten Füßen von Schaufeln von Turbinen (Dampfturbinen, Gasturbinen) durchgeführt.

Druckeigenspannungen können durch Rollieren eingebracht werden.
Eine andere Möglichkeit zur Erzeugung von Druckeigenspannungen stellt das gleichmäßige Kugeldruckstrahlen dar.
Die US-PS 5,911,780 zeigt eine solche Methode zur Erzeugung von Druckeigenspannungen.

Die US-PS 5,492,447 offenbart ein Verfahren zum Erzeugen von Druckeigenspannungen in Rotorkomponenten mittels eines Lasers. Ein ähnliches Verfahren ist in der EP 731 184 B1 offenbart.

Die WO 01/15866 A1 zeigt ein Verfahren zur Oberflächenbehandlung eines Bauteils, bei dem zumindest ein Strahlparameter bei einem abrasiven Strahlungsverfahren an die Konturlinie des Bauteils angepasst wird.

Die DE 197 42 137 A1 zeigt eine Walzvorrichtung zur Erzeugung von Druckeigenspannungen.

Bauteile nach dem Stand der Technik zeigen für die gewünschten Anforderungen an die lokal unterschiedlichen Betriebsspannungen keine ausreichende Festigkeit für außergewöhnliche Betriebszustände.

Es ist daher Aufgabe der Erfindung, dieses Problem zu überwinden.

Die Aufgabe wird gelöst durch ein Bauteil gemäss des Anspruchs 1, durch ein Verfahren gemäß Anspruch 10 sowie durch eine Vorrichtung zur Erzeugung von Druckeigenspannungen in einem Bauteil gemäß Anspruch 42.

In den Unteransprüchen sind weitere vorteilhafte Maßnahmen aufgelistet.
Die in den Unteransprüchen aufgelisteten Maßnahmen können in vorteilhafter Art und Weise miteinander kombiniert werden.

Es zeigen
- Figur 1, 2: ein Bauteil, das eine gekrümmte Oberfläche aufweist,
- Figur 3: eine schematische Anordnung einer Vorrichtung, mit der das erfindungsgemäße Verfahren durchzuführen ist,
- Figur 4: den lateralen Verlauf (schematisch) der Druckeigenspannungen,
- Figuren 5 bis 13: verschiedene Verfahrensabläufe des erfindungsgemäßen Verfahrens,
- Figur 15: eine Turbinenschaufel,

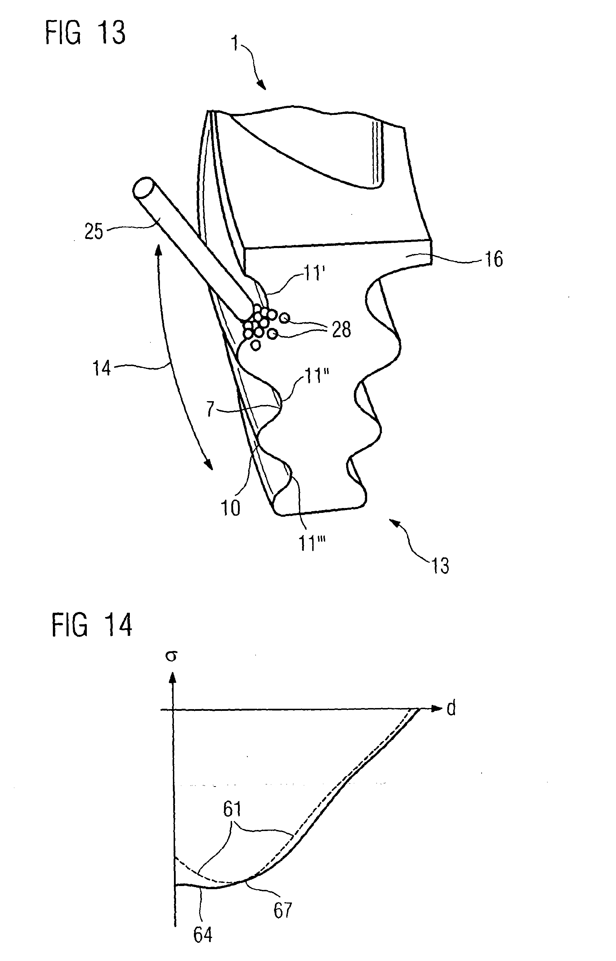

- Figur 14: einen Druckspannungsverlauf aufgetragen über der Tiefe eines Bauteils

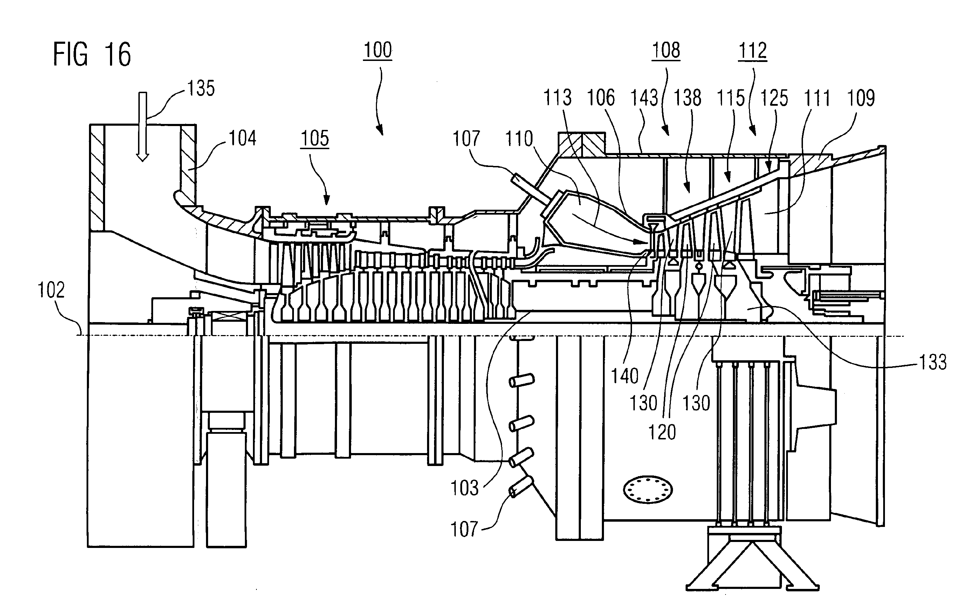

- Figur 16: eine Gasturbine,

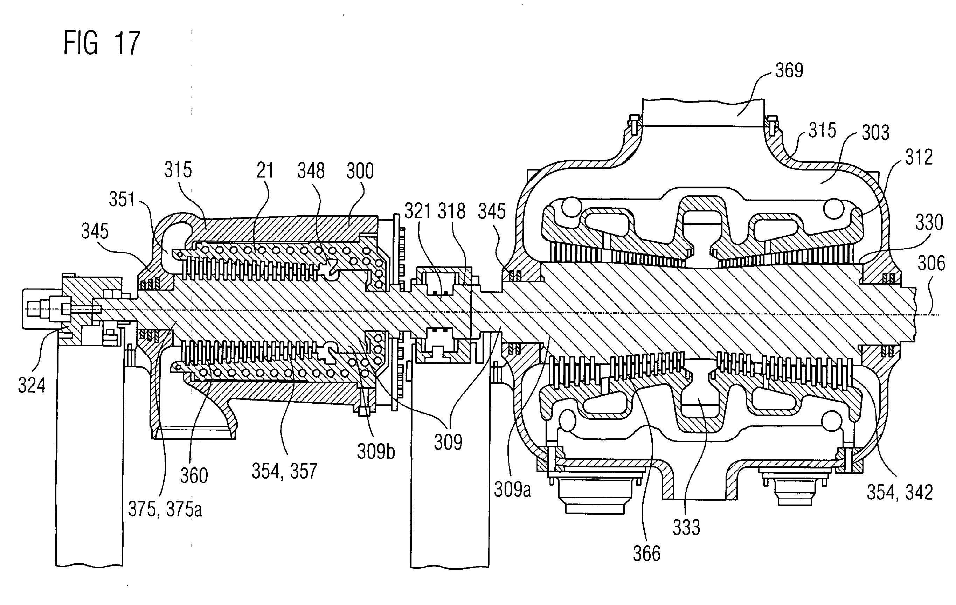

- Figur 17: eine Dampfturbine.

### Das Bauteil

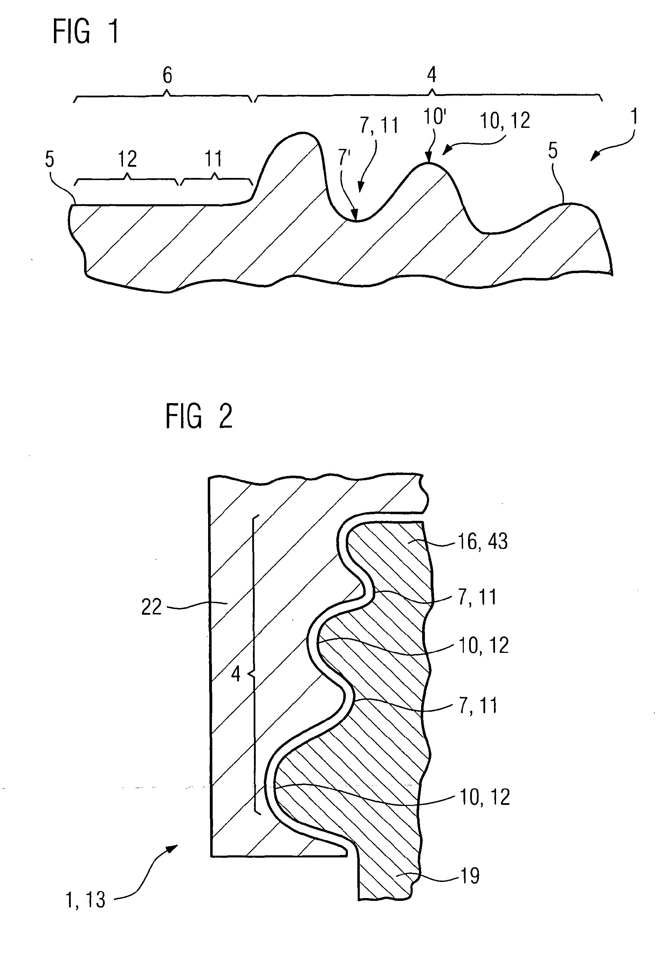

Figur 1 zeigt ein Bauteil 1 mit einer Oberfläche 5.
Das Bauteil 1 kann ein Bauteil einer Dampfturbine (Fig. 17) oder einer Gasturbine sein, wie z.B. eine Flugzeugturbine oder eine Turbine zur Stromerzeugung 100 (Fig. 16).
Solche Bauteile sind beispielsweise Turbinenschaufeln 120, 130, 342, 354, eine Brennkammerauskleidung 155 sowie andere Gehäuseteile.

Die Oberfläche 5 des Bauteils 1 setzt sich beispielsweise aus mehreren Oberflächenbereichen 4, 6 zusammen.
Ein Oberflächenbereich 6 ist beispielsweise eben oder nur einfach gekrümmt ausgeführt, wohingegen der Oberflächenbereich 4 mehrfach gekrümmt ist.
In der Oberfläche 5 und seinen Oberflächenbereichen 4 und/oder 6 sind erfindungsgemäß unterschiedliche und von Null verschiedene Druckeigenspannungen σ_{E} vorhanden.

Das Bauteil 1 weist ein Bereich 7, 11 einer Oberfläche 5 auf, der beispielsweise während des Einsatzes des Bauteils 1 höheren mechanischen Spannungen ausgesetzt ist als ein anderer Bereich 10, 12 der Oberfläche 5.

Der Oberflächenbereich 4 des Bauteils 1 weist zumindest teilweise konkav 7, dem Tal, und konvex 10 gekrümmte Bereiche, den Bergkuppen, auf, so dass es lokale Maxima 10' und lokale Minima 7' gibt. Ein konvex gekrümmter Bereich 10 schließt sich an den konkav gekrümmten Bereich 7 an.

In dem konkav gekrümmten Bereichen 7 liegt beispielsweise die äußere höhere mechanische Spannung an als in dem konvex gekrümmten Bereich 10, wenn das Bauteil 1, 13 eingebaut ist.

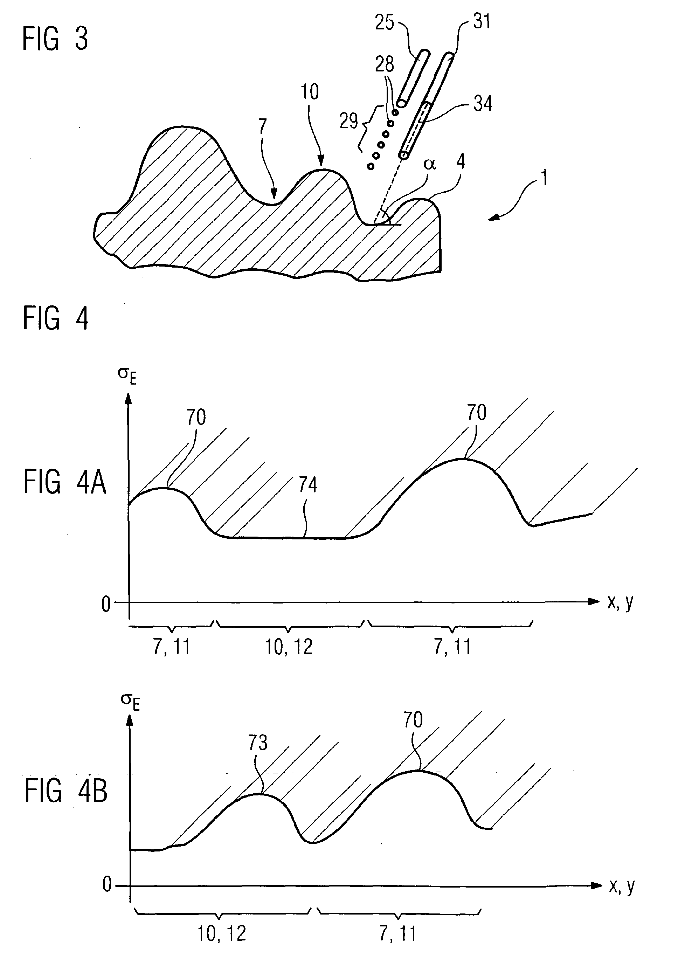

In den Oberflächenbereich 4 können durch Oberflächenbehandlungsverfahren Druckeigenspannungen σ_{E} eingebracht werden. Dies geschieht mittels passender Druckerzeuger 25 (Fig. 3), beispielsweise durch Rollieren, Kugelstrahlen oder Laserstrahlen.

Figur 2 zeigt beispielhaft als eingebautes Bauteil 1 einen Teilbereich einer Turbinenschaufel 13, nämlich einen Schaufelfuß 43 in seinem Befestigungsbereich 16 mit seiner tannenbaumähnlichen oder schwalbenschwanzartigen Struktur als mehrfach gekrümmte Oberfläche 4.
Der Schaufelfuß 43 ist beispielsweise in einer entsprechend ausgeformten Scheibe 22 angeordnet und wird dort gehalten.
Die Scheibe 22 ist wiederum auf einer Welle 103 einer Gasturbine 100 (Fig. 16) oder Dampfturbine (Fig. 17) angeordnet. Insbesondere in dem konkav gekrümmten Bereich 7 treten hohe mechanische Belastungen auf.
Daher besteht der Bedarf, das Bauteil 1 in diesen Bereichen lokal so zu beeinflussen, dass höhere Zugspannungen ertragen werden können indem die örtlichen Zugspannungen teilweise kompensiert werden. Dies muss jedoch kontrolliert und in Abhängigkeit von der Geometrie gezielt mit örtlich unterschiedlichen Druckeigenspannungen σ_{E} erfolgen.
Die Turbinenschaufel 13 kann auch an der Welle befestigt sein.

Figur 3 zeigt schematisch wie Druckerzeuger 25 und Bauteil 1 gegeneinander verfahren werden.
Erfindungsgemäß werden Druckeigenspannungen σ_{E} in dem Bauteil 1 ausgehend von der Oberfläche 4 bis in die Tiefe des Bauteils 1 hinein erzeugt.
Dies kann insbesondere durch Rollieren, Laserbestrahlung oder Kugelbestrahlung erfolgen.
Beispielhaft wird das erfindungsgemäße Verfahren anhand der Kugelbestrahlung näher erläutert. Die grundsätzliche Vorgehensweise, die Auswahl der Parameter ist auf die Laserbestrahlung, das Anrollieren oder andere Verfahren zur Erzeugung von Druckeigenspannungen analog zu übertragen.

Beispielsweise eine Kugelstrahldüse 25 als Druckerzeuger strahlt Strahlmittel 28 mit einer gewissen Geschwindigkeit aus, die einen Teilchenstrahl 29, insbesondere einen Kugelstrahl 29, bilden. Die Kugeln 28, insbesondere Stahlkugeln, treffen auf die Oberfläche 4 des Bauteils 1 auf und generieren durch ihren mechanischen Impuls einen Strahldruck auf der Oberfläche 4, so dass dort Druckeigenspannungen σ_{E} erzeugt werden.
Die Kugelstrahldüse 25 kann über einen Laserstrahl 31 so gesteuert werden, dass sie exakt im vordefinierten Bereich auch entlang von gekrümmten Konturen geführt wird.
Insbesondere der Abstand, der Auftreffwinkel α, d.h. der Winkel der Kugelstrahldüse 25 zu der Oberfläche 4 kann angepasst werden. Der Auftreffwinkel α ist beispielsweise kleiner als 90° und liegt insbesondere zwischen 80° und 85°.

Ebenso kann der Strahldruck des Kugelstrahls 29 bei der Kugelstrahldüse 25 eingestellt werden (Laser: Strahlleistung; Anrollieren: Anpressdruck).
Weitere Parameter sind die Größe des Strahlmittels 28 das Material des Strahlmittels 28 oder die Form der Düsenöffnung (Laser: Strahlform; Anrollieren: Form des Werkzeugs).

Das Bauteil 1 ist beispielsweise fest eingespannt, wobei beispielsweise in einem ersten Verfahrensschritt der Laser 31 mit seinen Laserstrahlen 34 die Oberfläche 4 des Bauteils 1 CNC gesteuert abtastet. Dabei wird entweder das Bauteil 1 auf einer CNC-Maschine montiert und gegenüber dem Laser 31 verfahren oder umgekehrt.
Durch das Abfahren der Oberfläche 4 des Bauteils 1 wird die exakte Geometrie des Bauteils 1 erfasst. Durch Vorgabe von bestimmten Bereichen (beispielsweise die konkav gekrümmten Bereiche 7) werden Bereiche festgelegt, die mit der Kugelstrahldüse 25 behandelt werden. Ebenso kann nach dem Erfassen der Oberfläche 4 beispielsweise automatisch eine Berechnung erfolgen, die festlegt, welche Bereiche besonders hohen mechanischen Belastungen ausgesetzt sind und dann dementsprechend die Ausdehnung und Höhe der Druckeigenspannungen σ_{E} festlegt werden, die mittels Kugelstrahlen 29 erzeugt werden sollen.
Durch die Höhe der Druckeinspannungen σ_{E}, die erzeugt werden soll, werden auch die Parameter der Kugelstrahldüse 25 bezogen auf die zu bestrahlende Fläche 7, 10 festgelegt.
Es handelt sich dabei also um eine Methode, bei der die Oberfläche 4 in einem Prozess lokal gezielt mit unterschiedlichen Parametern behandelt wird, so dass nach Durchführung des Verfahrens auf der gesamten Oberfläche lokal vordefinierte, jedoch unterschiedliche Druckeigenspannungen σ_{E} vorliegen. Die gesamte Oberfläche 4, auf der Druckeigenspannungen σ_{E} vorhanden sind, entspricht beispielsweise der Oberfläche eines Tannenbaumfußes einer Turbinenschaufel 13.
Lokal unterschiedlich bedeutet in diesem Fall, dass Bereiche erzeugt werden, die hohe und niedrigere und von null verschiedene Druckeigenspannungen σ_{E} nach dem Durchführen des Verfahrens aufweisen.

So werden insbesondere in den konkav gekrümmten Bereichen 7 hohe Druckeigenspannungen σ_{E} erzeugt, wohingegen in den übrigen Bereichen 10 geringere Druckeigenspannungen σ_{E} erzeugt werden. Insbesondere bleibt keine gekrümmte Fläche 7, 10 unbehandelt, so dass zumindest ein konvex gekrümmter Bereich 10 und ein konkav gekrümmter Bereich 7 in ihrem gesamten Oberflächenbereich Druckeigenspannungen σ_{E} aufweisen.
Die Steuerung des Kugelstrahles 29 erfolgt durch den Laser 31 und beispielsweise durch eine CNC-Maschine, die den Kugelstrahl 29 gegenüber dem Bauteil 1 bewegt, um verschiedene Bereiche 7, 10 bestrahlen zu lassen.

Figur 4 a) zeigt eine beispielhafte Verteilung der Druckeigenspannungen σ_{E} in einer x-y-Ebene.
In dem Bereich 7, 11, der die höheren Druckeigenspannungen σ_{E} aufweist, ist ein Maximum 70 in der Druckeigenspannung σ_{E} innerhalb der x-y-Ebene vorhanden.
Der Bereich 10, 12 weist ein Plateau 74 niedrigerer Druckeigenspannungen σ_{E} auf.
Jedoch ist das Maximum 70 und alle Werte des Bereichs 7, 11 höher als der Wert des Plateaus 74.
Lokal unterschiedliche Druckeigenspannungen bedeutet daher, dass die Druckeigenspannungen σ_{E} in dem Bereich 7, 11 höher sind als in dem Plateau 74 in dem Bereich 10, 12 mit den niedrigeren Druckeigenspannungen σ_{E}.

Figur 4 b) zeigt eine weitere beispielhafte Verteilung der Druckeigenspannungen σ_{E} in einer x-y-Ebene.
In dem Bereich 7, 11 der die höheren Druckeigenspannungen σ_{E} aufweist, ist ein Maximum 70 in der Druckeigenspannung σ_{E} innerhalb der x-y-Ebene vorhanden.
Der Bereich 10, 12 weist ein Maximum 73 niedrigerer Druckeigenspannungen σ_{E} auf.
Jedoch ist das Maximum 70 höher als das Maximum 73.
Lokal unterschiedliche Druckeigenspannungen bedeutet daher, dass das Maximum 70 in der Druckeigenspannung σ_{E} in dem Bereich 7, 11 höher ist als das Maximum 73 in dem Bereich 10, 12 mit den niedrigeren Druckeigenspannungen σ_{E}.
Zwar weist der Bereich 7, 11, wie in Figur 4b) auch ersichtlich, stellenweise niedrigere Druckeigenspannungen σ_{E} auf als der Bereich 10, 12, insbesondere in dem Übergangsbereich zwischen dem Bereich 7 und 10, jedoch bedeutet das, dass nicht ein punktueller Vergleich von Druckeigenspannungen σ_{E} herangezogen werden darf, um die Bereiche mit höheren Druckeigenspannungen σ_{E} und niedrigeren Druckeigenspannungen σ_{E} zu definieren, sondern die Höhe der Maxima 70, 73 zu Grunde zu legen ist.

### Verfahrensabläufe

Es gibt im Prinzip die Möglichkeit, die Druckeigenspannungen mit
I einer einzigen Kugelstrahldüse 25 oder
II mehreren Kugelstrahldüsen 25, 25', 25'', 25"', 25''''
zu erzeugen.

### I Eine Kugelstrahldüse

Wird nur eine einzige Kugelstrahldüse 25 verwendet, so können zuerst hohe Druckeigenspannungen σ_{E} und niedrige Druckeigenspannungen σ_{E} erzeugt werden oder umgekehrt.

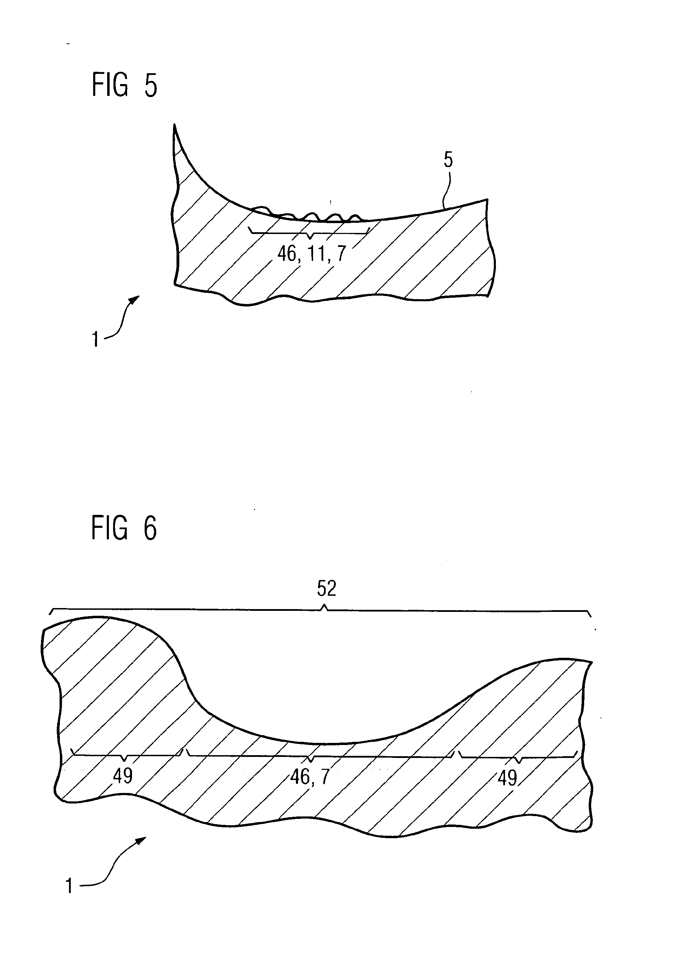

Figur 5 zeigt einen Teilbereich der Oberfläche 5 eines Bauteils 1, 13.

In einem ersten Verfahrensschritt erfolgt beispielsweise eine Kugelstrahlung eines konkav gekrümmten Bereichs 46 mit hohem Strahldruck.
In einem weiteren Verfahrensschritt werden andere, benachbarte Bereich 49 behandelt, bei denen eine Kugelbestrahlung mit geringerem Strahldruck erfolgt (Fig. 6).

Ebenso kann aber auch eine gesamte Fläche 52, die die Bereiche 46 und 49 umfasst, mit einer Kugelbestrahlung 29 geringeren Strahldrucks beaufschlagt werden, wobei der stärker bestrahlte Bereich 46 durch die Kugelstrahlen geringeren Strahldrucks geglättet wird.

Es können auch zuerst konvex gekrümmten Bereiche 49 mit geringerem Strahldruck bestrahlt werden und dann in einem weiteren Verfahrensschritt die konkav gekrümmten Bereiche 46 mit höherem Strahldruck bestrahlt werden.

Das Verfahren kann angewendet werden bei neu hergestellten Bauteilen 1 sowie bei wieder aufgearbeiteten Bauteilen 1.

Wiederaufarbeitung bedeutet, dass Bauteile 1 nach ihrem Einsatz gegebenenfalls von Schichten befreit werden oder auf Risse untersucht werden, wobei die gegebenenfalls repariert werden. Druckeigenspannungen σ_{E} werden dann wieder neu erzeugt.

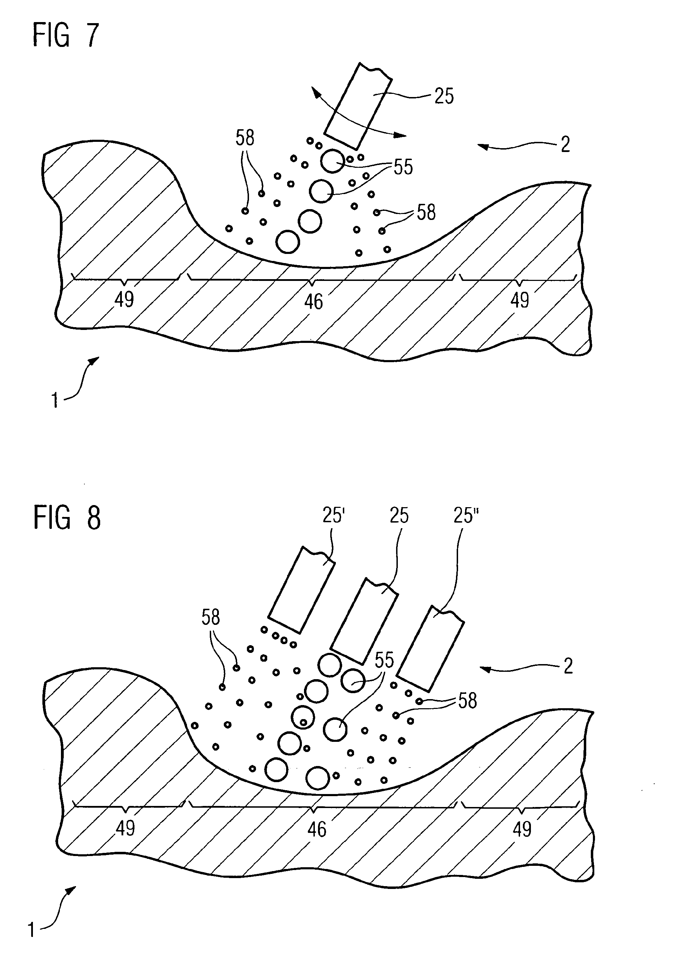

Figur 7 zeigt eine erste Vorrichtung 2, mit der das erfindungsgemäße Verfahren durchzuführen ist.

Bei dieser Vorrichtung 2 wird nur eine Kugelstrahldüse 25 verwendet.

In einem ersten Schritt wird im Bereich 46 (konkav gekrümmter Bereich) ein hoher Strahldruck eingebracht.
Durch Bewegung der Kugelstrahldüse 25 oder des Bauteils 1, beispielsweise durch Variation des Auftreffwinkels, wird dann ein Kugelstrahl 29 auf die Bereiche 49 (konkav gekrümmter Bereich) gelenkt, in denen geringere Strahldrücke erzeugt werden sollen.
Dies kann dadurch erreicht werden, dass die Kugeln 28, die im Bereich 46 verwendet wurden, geringere Geschwindigkeiten und damit geringere mechanische Impulse erfahren oder dass die Kugelstrahldüse 25 Kugeln 28 kleineren Durchmessers 58 in die Bereiche 49 abstrahlt.

Wenn die Kugeln 28 einen kleinen Durchmesser aufweisen, so können verschiedene Strahldrücke erzeugt werden, indem beispielsweise die Materialien der Kugeln verschieden hart sind. So kann für hartes Material beispielsweise keramisches Material und als weiches Material metallisches Material verwendet werden.

Große Kugeln 55 erzeugen bei gleicher Geschwindigkeit gegenüber kleineren Kugeln 58 einen größeren Strahldruck.

Ebenso ist es möglich, kleine keramische Kugeln und große metallische Kugeln zu verwenden.
Weitere Kombinationsmöglichkeiten von verschiedenen Materialien, Durchmessern und Form der Kugeln sind denkbar, beispielsweise um eine abrasive Wirkung oder Verminderung der Rauhigkeit bzw. Glättung zu erzielen.

### II Mehrere Kugelstrahldüsen

Wenn mehrere Kugelstrahldüsen 25, 25', 25'', 25''', 25"" verwendet werden, so können diese
a) einzeln oder gepaart zeitlich nacheinander oder
b) gleichzeitig betrieben werden.

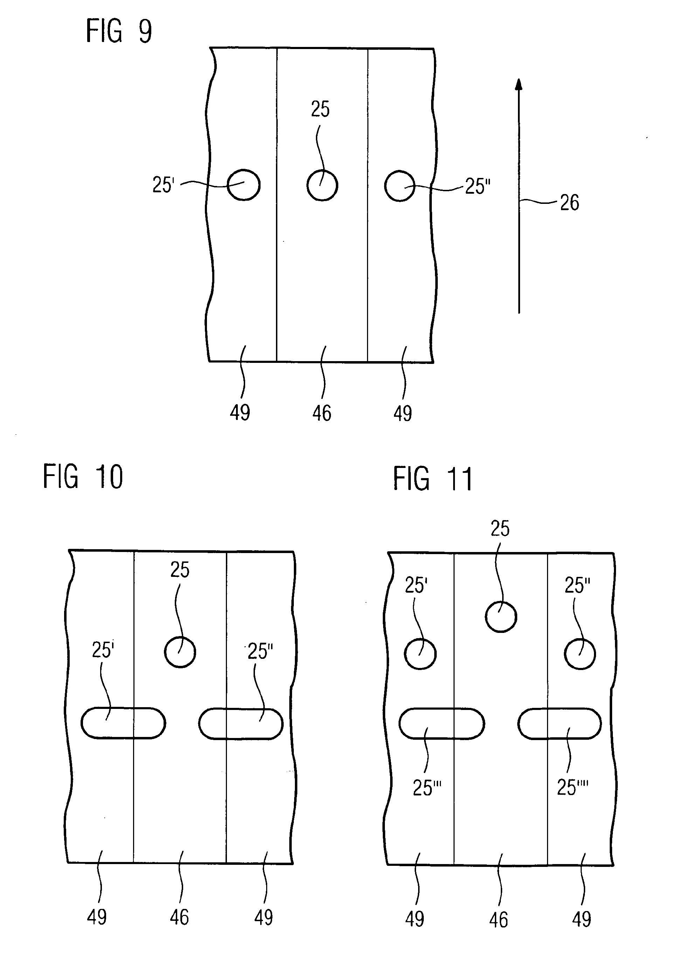

Wenn die Kugelstrahldüsen 25, 25', 25", 25"', 25"" gleichzeitig betrieben werden, so können die Kugelstrahldüsen 25, 25', 25'', 25"', 25'''' örtlich auf gleicher Höhe sein (Fig. 9) oder gegeneinander versetzt sein, d.h. eine oder mehrere Kugelstrahldüsen sind vorlaufend und die andere oder anderen nachlaufend (Fig. 10, 11).

Figur 8 zeigt eine weitere Vorrichtung 2 mit der das erfindungsgemäße Verfahren durchzuführen ist.
Bei dieser Vorrichtung 2 werden beispielsweise mehrere, zumindest zwei, hier drei Kugelstrahldüsen 25, 25', 25'' verwendet.

So kann z.B. zuerst die Kugelstrahldüse 25 verwendet werden, um den Bereich 46 (konkav gekrümmter Bereich 7) mit hohem Strahldruck zu beaufschlagen.

In einem zweiten Schritt werden nur die anderen Kugelstrahldüsen 25', 25'' benutzt, um die Bereiche 49 (konkav gekrümmter Bereich 10) mit geringeren Strahldrücken zu beaufschlagen.

Ebenso können die in Figur 8 gezeigten drei Kugelstrahldüsen 25, 25', 25" gleichzeitig betrieben werden.

Dabei können eine oder zwei Kugelstrahldüsen 25', 25'', die geringere Strahldrücke erzeugen, ebenfalls in den Bereich 46 hineinstrahlen (Fig. 10, 11).

Dabei erzeugt eine Kugelstrahldüse 25 einen hohen Strahldruck und bestrahlt den konkav gekrümmten Bereich 7 und die zweite oder weitere Kugelstrahldüse 25', 25" erzeugt einen geringeren Strahldruck als die Kugelstrahldüse 25 auf und bestrahlen den konvex gekrümmten Bereich 10.

Unabhängig davon, ob die Kugelstrahldüsen 25, 25', 25'' gleichzeitig oder nacheinander betrieben werden, können für jede Kugelstrahldüse 25, 25', 25" verschiedene Parameter eingestellt werden.

Als Parameter für die Kugelstrahldüse 25, 25', 25" kann der Strahldruck, die Größe des Strahlmittels 28, das Material des Strahlmittels 28 oder der Auftreffwinkel α ausgewählt werden.
Insbesondere weisen die Kugelstrahldüse 25 und die Kugelstrahldüsen 25', 25'' verschiedene Parameter, insbesondere verschiedene Strahldrücke, auf.

Die Kugelstrahldüsen 25, 25', 25" können nebeneinander, d.h. wie in Figur 9 angedeutet, auf einer Höhe vorhanden oder hintereinander angeordnet sein (Fig. 10, 11).

Die verschiedenen Parameter für die Kugelstrahldüsen 25, 25', 25" werden vorgegeben und die Bereiche 46, 49 werden in einem Arbeitsgang überfahren. Das sieht beispielsweise so aus, dass die Kugelstrahldüsen 25, 25', 25" eine feste Position haben und das Bauteil auf einer beweglichen Unterlage (CNC-Maschine) montiert ist und unter den Kugelstrahldüsen 25, 25', 25" bewegt wird. Das Bauteil 1 kann auch hin und her bewegt werden, so dass die Bereiche 46, 49 mehrfach bestrahlt werden. Durch diese Vorgehensweise müssen die Bereiche 7, 10, in denen unterschiedliche Druckeigenspannungen erzeugt werden sollen, nicht nacheinander mit Kugelstrahlen beaufschlagt werden. Dies führt zu einem erheblichen Zeitvorteil.

Figur 9 zeigt eine Aufsicht auf die Bereiche 46 und 49 und die dazu beispielhaft verwendete Anordnung der Kugelstrahldüsen 25, 25' und 25''.
Die Kugelstrahldüsen 25, 25', 25'' sind hier auf gleicher Höhe angeordnet.

Die Kugelstrahldüsen 25, 25', 25'' werden in einer Verfahrrichtung 26 über die Bereiche 46 und 49 verfahren. Dies kann in einem Arbeitsschritt erfolgen, in dem alle drei Düsen 25, 25' und 25" gleichzeitig betrieben werden, wobei dem Bereich 46 eine höhere Druckeigenspannung σ_{E} durch die Kugelstrahldüse 25 und niedrige Druckeigenspannungen σ_{E} in den angrenzenden Bereichen 49 erzeugt werden.

Die Kugelstrahldüse 25 und die Kugelstrahldüsen 25' und 25'' können auch zeitlich gesehen nacheinander betrieben werden. So kann in einem ersten Verfahrensschritt nur die Kugelstrahldüse 25 betrieben werden, die dann in den Bereich 46 hohe Druckeigenspannungen σ_{E} erzeugt. In einem zweiten oder weiteren Verfahrensschritten wird nicht mehr die Kugelstrahldüse 25 betrieben, sondern die Kugelstrahldüsen 25' und 25'', die in den an den Bereich 46 angrenzende Bereiche 49 niedrigere Druckeigenspannungen σ_{E} erzeugen.

Figur 10 zeigt eine weitere Möglichkeit Druckeigenspannungen σ_{E} in den Bereichen 46 und 49 zu erzeugen.

Die Öffnungen der Kugelstrahldüsen 25' und 25" sind länglich ausgebildet und überdecken sowohl den Bereich 49 und den angrenzenden Bereich 46. Dieses ist beispielsweise dann gewollt, wenn dadurch eine Glättung des Bereichs 46 erfolgen soll. Die Kugelstrahldüsen 25' und 25" sind daher in Verfahrrichtung örtlich gesehen gegenüber der Kugelstrahldüse 25 versetzt. Die Kugelstrahldüse 25 ist beispielsweise vorlaufend und die Kugelstrahldüsen 25' und 25'' nachlaufend. Auch hier können die Kugelstrahldüsen 25, 25' und 25'' zeitlich gesehen zusammen oder nacheinander betrieben werden.

Figur 11 zeigt eine weitere Anordnung von Kugelstrahldüsen. Hier werden fünf Kugelstrahldüsen 25, 25', 25'', 25''' und 25"" verwendet.
Die Parameter für die einzelnen Kugelstrahldüsen 25 und 25', 25'' sowie 25''' und 25"" können jeweils unterschiedlich sein und den gewünschten Anforderungen angepasst sein.

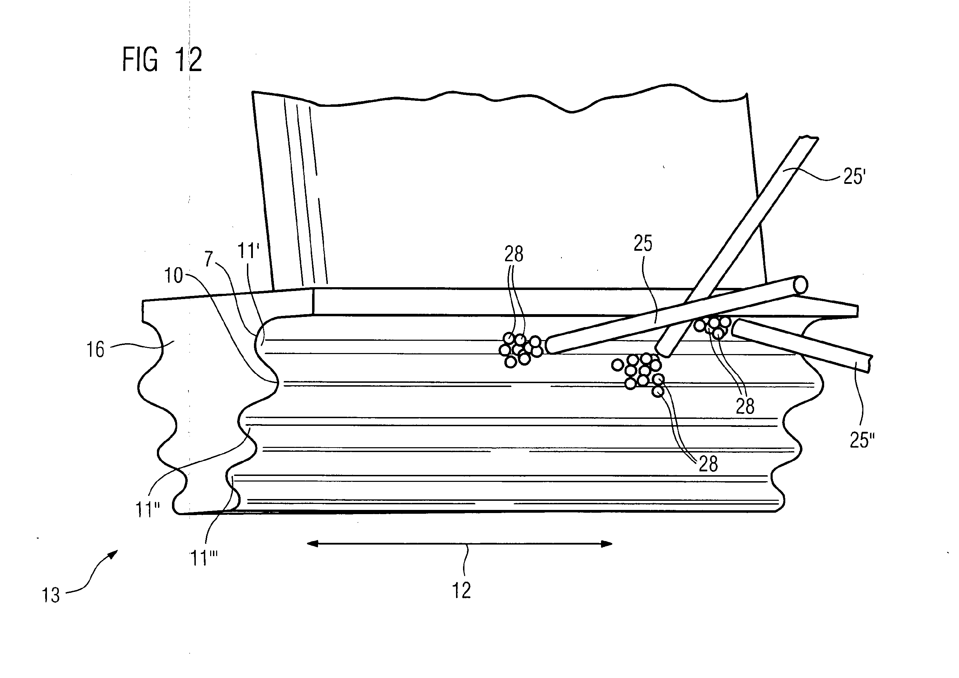

Figur 12 zeigt als Bauteil 1 eine Turbinenschaufel 13 mit ihrem tannenbaumähnlich ausgebildeten Schaufelfuß 16.
Der Schaufelfuß 16 weist konkav gekrümmte Bereiche 7 auf, in denen hohe Druckeigenspannungen σ_{E} vorhanden sein sollen und weist konvex gekrümmte Bereiche 10 auf, in denen geringere Druckeigenspannungen σ_{E} als im konvex gekrümmten Bereich 7 vorhanden sein sollen.

Der Schaufelfuß 16 weist beispielsweise drei Rillen 11', 11'', 11''' auf, wobei die drei Kugelstrahldüsen 25, 25', 25'' beispielsweise bezüglich ihrer Parameter fest gegenüber der ersten Rille 11' eingestellt sind.
Die Turbinenschaufel 13 oder das Bauteil 1 wird entlang einer Richtung 12 gegenüber den Kugelstrahldüsen 25, 25' und 25'' verschoben, so dass die gesamte Rille 11' bestrahlt wird. Dieser Vorgang kann für die weiteren Rillen 11'' und 11''' wiederholt werden, oder es sind entsprechend für die Rillen 11'' und 11''' weitere Kugelstrahldüsen vorhanden, die eine gleichzeitige Bearbeitung aller Rillen ermöglichen.

Figur 13 zeigt schematisch, dass die Kanten der Rillen 11 ebenfalls bestrahlt werden, um Druckeigenspannungen σ_{E} zu erzeugen.
Außerdem ist zu erkennen, dass das Bauteil 1 in sich gekrümmt ist.

Figur 14 zeigt den prinzipiellen Verlauf der Druckeigenspannung σ_{E} in einem Bauteil 1, wie er sich durch einen Bestrahlungsvorgang ergibt
In dem Diagramm ist die Druckeigenspannung σ_{E} über der Tiefe d eines Bauteils 1 aufzutragen. Das Maximum 67 der Druckeigenspannung σ_{E} liegt nicht an der Oberfläche 4 des Bauteils 1, d.h. bei d = 0, sondern im Inneren des Bauteils 1 (d > 0). Den Verlauf der Druckeigenspannung σ_{E} zeigt die gestrichelt gezeichnete Kurve 61.

Gewünscht ist jedoch, dass ein maximaler Wert der Druckeigenspannung σ_{E} an der Oberfläche 4 des Bauteils 1 vorhanden ist. Diesen gewünschten Verlauf der Druckeigenspannung σ_{E} zeigt die durchgezogene Linie der Kurve 64.

Der gewünschte Verlauf 64 kann beispielsweise wie folgt erreicht werden.

In einem ersten Arbeitsgang wird ein Bereich 7, 10 mit hohem Strahldruck bestrahlt.
In einem zweiten Arbeitsgang wird derselbe Bereich 7, 10 mit geringerer Intensität bestrahlt, so dass sich das Maximum an die Oberfläche 4 des Bauteils 1 verschiebt. Dies kann jedoch wie oben beschrieben auch in einem Arbeitsgang erfolgen.

So wird erreicht, dass das Maximum der Druckeigenspannung σ_{E} an der Oberfläche 4 oder nahe der Oberfläche 4 vorhanden ist und trotzdem eine hohe Eindringtiefe der Druckeigenspannung σ_{E} in den Bauteil 1 vorhanden ist.

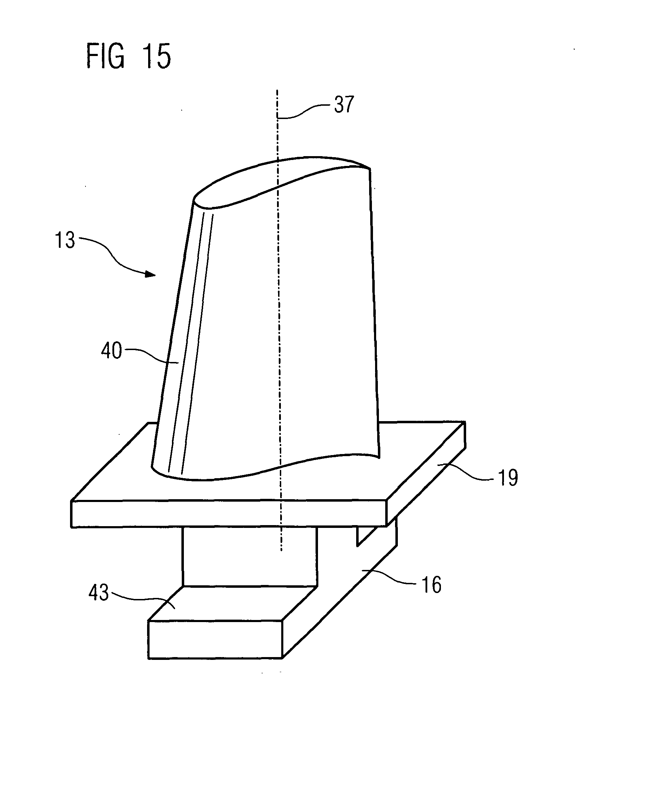

Figur 15 zeigt ein Bauteil 13, das mittels des erfindungsgemäßen Verfahrens behandelt werden kann.
Figur 15 zeigt in perspektivischer Ansicht eine Laufschaufel 13 beispielsweise für eine Dampfturbine, die sich entlang einer Längsachse 37 erstreckt.
Bei herkömmlichen Laufschaufeln 13 werden in allen Bereichen 9, 43, 7 der Laufschaufel 1 massive metallische Werkstoffe verwendet.
Die Laufschaufel 1 kann hierbei durch ein Gussverfahren, durch ein Schmiedeverfahren, durch ein Fräsverfahren oder Kombinationen daraus gefertigt sein.
Die Laufschaufel 13 weist entlang der Längsachse aufeinander folgend einen Befestigungsbereich 16, eine daran angrenzende Schaufelplattform 19 sowie einen Schaufelblattbereich 40 auf. Im Befestigungsbereich 16 ist ein Schaufelfuß 43 gebildet, der zur Befestigung der Laufschaufel 13 an der Scheibe 22 einer nicht dargestellten Strömungsmaschine dient. Der Schaufelfuß 43 ist als Hammerkopf ausgestaltet. Andere Ausgestaltungen, beispielsweise als Tannenbaum- (Fig. 2) oder Schwalbenschwanzfuß sind möglich.
Der Tannenbaumfuß 43 weist sowohl zumindest in einem konkav gekrümmten Bereich 10 und dem sich anschließenden konvex gekrümmten Bereich 7 von null verschiedene Druckeigenspannungen auf, so dass Druckeigenspannungen großflächig auf der Oberfläche des Schaufelfußes, insbesondere überall, vorhanden sind.

Die Figur 16 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.
Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei am Stator 143 befestigt, wohingegen die Laufschaufeln 120 einer Reihe 125 beispielsweise mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt.

Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, werden diese mittels eines Kühlmittels gekühlt.
Ebenso können die Substrate eine gerichtete Struktur aufweisen, d.h. sie einkristallin (SX-Struktur) oder weisen nur längsgerichtete Körner auf (DS-Struktur).
Als Material werden Eisen-, Nickel- oder Kobaltbasierte Superlegierungen verwendet.
Ebenso können die Schaufeln 120, 130 Beschichtungen gegen Korrosion (MCrAlX; M ist zumindest ein Element der Gruppe Eisen (Fe), Kobalt (Co), Nickel (Ni), X steht für Yttrium (Y) und/oder zumindest ein Element der Seltenen Erden) und Wärme durch eine Wärmedämmschicht aufweisen. Die Wärmedämmschicht besteht beispielsweise ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegendem Leitschaufelkopf auf. Der Leitschaufelkopf ist dem Rotor 103 zugewandt und an einem Befestigungsring 140 des Stators 143 festgelegt.

In Figur 17 ist beispielhaft eine Dampfturbine 23, 25 mit einer sich entlang einer Rotationsachse 2 erstreckenden Turbinenwelle 11 dargestellt.
Die Dampfturbine weist eine Hochdruck-Teilturbine 23 und eine Mitteldruck-Teilturbine 25 mit jeweils einem Innengehäuse 21 und einem dieses umschließende Außengehäuse 22 auf. Die Hochdruck-Teilturbine 23 ist in Topfbauart ausgeführt. Die Mitteldruck-Teilturbine 25 ist zweiflutig ausgeführt. Es ist ebenfalls möglich, dass die Mitteldruck-Teilturbine 25 einflutig ausgeführt ist. Entlang der Rotationsachse 2 ist zwischen der Hochdruck-Teilturbine 23 und der Mitteldruck-Teilturbine 25 ein Lager 29b angeordnet, wobei die Turbinenwelle 11 in dem Lager 29b einen Lagerbereich 32 aufweist. Die Turbinenwelle 11 ist auf einem weiteren Lager 29a neben der Hochdruck-Teilturbine 23 aufgelagert. Im Bereich dieses Lagers 29a weist die Hochdruck-Teilturbine 23 eine Wellendichtung 24 auf. Die Turbinenwelle 1 ist gegenüber dem Außengehäuse 22 der Mitteldruck-Teilturbine 25 durch zwei weitere Wellendichtungen 24 abgedichtet. Zwischen einem Hochdruck-Dampfeinströmbereich 27 und einem Dampfaustrittsbereich 16 weist die Turbinenwelle 1 in der Hochdruck-Teilturbine 23 die Hochdruck-Laufbeschaufelung 11, 13 auf. Diese Hochdruck-Laufbeschaufelung 11, 13 stellt mit den zugehörigen, nicht näher dargestellten Laufschaufeln einen ersten Beschaufelungsbereich 30 dar. Die Mitteldruck-Teilturbine 25 weist einen zentralen Dampfeinströmbereich 15 auf. Dem Dampfeinströmbereich 15 zugeordnet weist die Turbinenwelle 1 eine radialsymmetrische Wellenabschirmung 9, eine Abdeckplatte, einerseits zur Teilung des Dampfstromes in die beiden Fluten der Mitteldruck-Teilturbine 25 sowie zur Verhinderung eines direkten Kontaktes des heißen Dampfes mit der Turbinenwelle 1 auf. Die Turbinenwelle 1 weist in der Mitteldruck-Teilturbine 25 einen zweiten Beschaufelungsbereich 31 mit den Mitteldruck-Laufschaufeln 11, 14 auf. Der durch den zweiten Beschaufelungsbereich 31 strömende heiße Dampf strömt aus der Mitteldruck-Teilturbine 25 aus einem Abströmstutzen 26 zu einer strömungstechnisch nachgeschalteten, nicht dargestellten Niederdruck-Teilturbine.

## Patentansprüche

1. Bauteil (1, 13, 120, 130, 342, 354)
mit einer Oberfläche (5),
die zumindest stellenweise Druckeigenspannungen (σ_{E}) aufweist,
**dadurch gekennzeichnet, dass**
in zumindest zwei Oberflächenbereichen (4, 6) der Oberfläche (5) lokal unterschiedliche und von null verschiedene Druckeigenspannungen (σ_{E}) vorhanden sind.

2. Bauteil nach Anspruch 1,
**dadurch gekennzeichnet, dass**
in einem Bereich (7, 11) der Oberfläche (5) höhere mechanische Spannungen anliegen als in einem anderen Bereich (10, 12) der Oberfläche (5).

3. Bauteil nach Anspruch 1 oder 2,
**dadurch gekennzeichnet, dass**
das Bauteil (1, 13, 120, 130, 342, 354) zumindest teilweise eine gekrümmte Oberfläche (7, 10) aufweist,
und insbesondere die gesamte mehrfach gekrümmte Oberfläche (7, 10) Druckeigenspannungen (σ_{E}) aufweist.

4. Bauteil nach Anspruch 1, 2 oder 3,
**dadurch gekennzeichnet, dass**
die Oberfläche (4) aus zumindest einem konkav gekrümmten Bereich (7) und zumindest einem konvex gekrümmten Bereich (10) besteht, die insbesondere aneinander angrenzen.

5. Bauteil nach Anspruch 4,
**dadurch gekennzeichnet, dass**
der konkav gekrümmte Bereich (7) höhere Druckeigenspannungen (σ_{E}) aufweist als der konvex gekrümmte Bereich (10) .

6. Bauteil nach Anspruch 5,
**dadurch gekennzeichnet, dass**
in dem konkav gekrümmten Bereich (7) höhere äußere mechanische Spannungen anliegen als in dem konvex gekrümmten Bereich (10).

7. Bauteil nach Anspruch 1 bis 6,
**dadurch gekennzeichnet, dass**
das Bauteil (1) ein Bauteil einer Dampf- (300, 303) oder Gasturbine (100) ist,
insbesondere eine Turbinenschaufel (120, 130, 342, 354).

8. Bauteil nach Anspruch 5, 6 oder 7,
**dadurch gekennzeichnet, dass**
das Bauteil (1) eine Turbinenschaufel (120, 130, 342, 354) ist,
die in einem Befestigungsbereich (16) eine gekrümmte Oberfläche (4),
insbesondere in Form eines Tannenbaums oder Schwalbenschwanzes, aufweist,
und die gekrümmte, insbesondere die gesamte Oberfläche (4) Druckeigenspannungen (σ_{E}) aufweist.

9. Bauteil nach Anspruch 1 bis 8,
**dadurch gekennzeichnet,**
**dass** der Bereich (7, 10) eine laterale Verteilung der Höhe der Druckeigenspannungen (σ_{E}) mit zumindest einem Maximum (70, 73) und/oder einem Plateau (74) aufweist, und dass das Maximum (70) des Bereichs (7) höher ist als das Maximum (73) oder das Plateau (74) des Bereichs (10).

10. Verfahren zur Herstellung eines Bauteils nach Anspruch 1 bis 9,
**dadurch gekennzeichnet, dass**
zumindest teilweise auf einer Oberfläche (4, 7, 10) des Bauteils (1, 13) lokal unterschiedliche und von null verschiedene Druckeigenspannungen (σ_{E}) erzeugt werden.

11. Verfahren nach Anspruch 10,
**dadurch gekennzeichnet, dass**
eine gekrümmte, insbesondere mehrfach gekrümmte Oberfläche (4) mit dem Verfahren behandelt wird,
die insbesondere zumindest einen konkaven Bereich (7) und einen konvex gekrümmten Bereich (10) aufweist.

12. Verfahren nach Anspruch 10,
**dadurch gekennzeichnet, dass**
die Druckeigenspannungen (σ_{E}) durch einen Druckerzeuger (25) erzeugt werden.

13. Verfahren nach Anspruch 10 oder 12,
**dadurch gekennzeichnet, dass**
die Druckeigenspannungen (σ_{E}) durch zumindest einen zum Rollieren geeigneten Druckerzeuger (25) erzeugt werden.

14. Verfahren nach Anspruch 10 oder 12,
**dadurch gekennzeichnet, dass**
die Druckeigenspannungen (σ_{E}) durch Kugelbestrahlung mittels zumindest einer Kugelstrahldüse als Druckerzeuger (25) erzeugt werden.

15. Verfahren nach Anspruch 10 oder 12,
**dadurch gekennzeichnet, dass**
die Druckeigenspannungen (σ_{E}) durch Laserbestrahlung mittels zumindest eines Lasers als Druckerzeuger (25) erzeugt werden.

16. Verfahren nach Anspruch 12 bis 15,
**dadurch gekennzeichnet, dass**
nur ein Druckerzeuger (25) verwendet wird.

17. Verfahren nach Anspruch 12 bis 15,
**dadurch gekennzeichnet, dass**
mehrere Druckerzeuger (25, 25', 25''), insbesondere drei oder fünf, verwendet werden.

18. Verfahren nach Anspruch 17,
**dadurch gekennzeichnet, dass**
zumindest zwei Kugelstrahldüsen (25, 25', 25'') gleichzeitig betrieben werden,
um das Bauteil (1, 13) zu bestrahlen.

19. Verfahren nach Anspruch 17,
**dadurch gekennzeichnet, dass**
die Kugelstrahldüsen (25, 25', 25") im zeitlichen Abstand nacheinander betrieben werden.

20. Verfahren nach Anspruch 16 bis 19,
**dadurch gekennzeichnet, dass**
für die zumindest eine Kugelstrahldüse (25) verschiedene einstellbare Parameter verwendet werden.

21. Verfahren nach Anspruch 20,
**dadurch gekennzeichnet, dass**
als Parameter für die Kugelstrahldüse (25, 25', 25'') der Strahldruck, die Größe des Strahlmittels (28), das Material des Strahlmittels (28), der Auftreffwinkel (α) oder die Strahlform ausgewählt werden.

22. Verfahren nach Anspruch 20 oder 21,
**dadurch gekennzeichnet, dass**
für die Kugelstrahldüsen (25, 25', 25'') verschiedene Parameter,
insbesondere verschiedene Stahldrücke benutzt werden.

23. Verfahren nach Anspruch 22,
**dadurch gekennzeichnet,**
**dass** zumindest eine Kugelstrahldüse (25) einen hohen Strahldruck erzeugt, und
**dass** zumindest eine zweite oder weitere Kugelstrahldüsen (25', 25'') einen geringeren Strahldruck als die erste Kugelstrahldüse (25) erzeugen.

24. Verfahren nach Anspruch 19 oder 23,
**dadurch gekennzeichnet, dass**
in einem ersten Verfahrensschritt eine Kugelbestrahlung mit hohem Strahldruck erfolgt,
und dass in einem zweiten Schritt eine Kugelbestrahlung mit niedrigerem Strahldruck als im ersten Verfahrensschritt erfolgt.

25. Verfahren nach Anspruch 19 oder 23,
**dadurch gekennzeichnet, dass**
in einem ersten Verfahrensschritt eine Kugelbestrahlung mit geringem Strahldruck erfolgt,
und dass in einem zweiten Schritt eine Kugelbestrahlung mit höherem Strahldruck als im ersten Verfahrensschritt erfolgt.

26. Verfahren nach Anspruch 24,
**dadurch gekennzeichnet, dass**
in einem ersten Verfahrensschritt eine Kugelbestrahlung des zumindest einen konkav gekrümmten Bereichs (7) erfolgt,
und dass in einem zweiten Verfahrenschritt eine Kugelbestrahlung des zumindest einen konvex gekrümmten Bereichs (10) erfolgt.

27. Verfahren nach Anspruch 25,
**dadurch gekennzeichnet, dass**
in einem ersten Verfahrensschritt eine Kugelbestrahlung des zumindest einen konvex gekrümmten Bereichs (10) erfolgt,
und dass in einem zweiten Verfahrensschritt eine Kugelbestrahlung des zumindest einen konkav gekrümmten Bereichs (7) erfolgt.

28. Verfahren nach Anspruch 18,
**dadurch gekennzeichnet, dass**
dass verschiedene Parameter für die Kugelstrahldüsen (25, 25', 25'') eingestellt werden, und
dass dann ein konkav (7) und ein konvex (10) gekrümmter Bereich des Bauteils (1) zusammen durch zumindest einmaliges Überfahren der Bereiche (7, 10) bestrahlt wird.

29. Verfahren nach Anspruch 10 bis 28,
**dadurch gekennzeichnet, dass**
die Druckerzeuger (25 bis 25'''') oder das Bauteil beim Rollieren, bei der Kugelbestrahlung oder bei der Laserbestrahlung kontrolliert geführt werden.

30. Verfahren nach Anspruch 29,
**dadurch gekennzeichnet, dass**
die kontrollierte Führung durch einen Laser (31, 34) erfolgt.

31. Verfahren nach Anspruch 24 oder 28,
**dadurch gekennzeichnet, dass**
durch die Kugelbestrahlung mit geringerem Strahldruck die Bereiche (46),
die zuvor mit hohem Strahldruck bestrahlt wurden, geglättet werden.

32. Verfahren nach Anspruch 14,
**dadurch gekennzeichnet, dass**
ein Kugelstrahl (29) der Kugelbestrahlung Kugeln (55, 58, 28) verschiedener Durchmesser enthält.

33. Verfahren nach Anspruch 14,
**dadurch gekennzeichnet, dass**
ein Kugelstrahl (29) der Kugelstrahldüsen (25, 25', 25", 25''', 25'''') Kugeln (55, 58, 28) aus verschieden harten Materialien enthält.

34. Verfahren nach Anspruch 33,
**dadurch gekennzeichnet, dass**
die Kugeln (55, 58, 28) aus Keramik und/oder Metall bestehen.

35. Verfahren nach Anspruch 33 oder 34,
**dadurch gekennzeichnet, dass**
ein hoher Strahldruck durch metallische Kugeln erreicht wird, und
ein geringer Strahldruck durch keramische Kugeln erreicht wird.

36. Verfahren nach Anspruch 33 oder 34,
**dadurch gekennzeichnet, dass**
ein hoher Strahldruck durch große Kugeln (55) und ein geringer Strahldruck durch kleine Kugeln (58) erreicht wird.

37. Verfahren nach Anspruch 10,
**dadurch gekennzeichnet, dass**
mit dem Verfahren ein Bauteil (1) einer Dampf- (300, 303, 25) oder Gasturbine (100), insbesondere eine Turbinenschaufel (11, 13, 14, 120, 130) oder eine Brennkammerauskleidung (155) bestrahlt wird.

38. Verfahren nach Anspruch 21,
**dadurch gekennzeichnet, dass**
ein Auftreffwinkel (α) zwischen der Strahlrichtung zumindest einen Kugelstrahldüse (25, 25', 25'', 25"', 25'''') und der gekrümmten Oberfläche (4) des Bauteils (1) eingestellt wird, der (α) kleiner als 90° ist,
insbesondere zwischen 80° und 85° liegt.

39. Verfahren nach Anspruch 15 oder 24,
**dadurch gekennzeichnet, dass**
in einem ersten Verfahrensschritt eine Kugelbestrahlung eines Bereichs (7, 10) mit einem bestimmten Strahldruck erfolgt, und
dass in einem zweiten Verfahrenschritt derselbe Bereich (7, 10) mit einem geringeren Strahldruck bestrahlt wird, um das Maximum der Druckeigenspannung ganz oder nahe an die Oberfläche (4) des Bauteils (1) zu verschieben.

40. Verfahren nach Anspruch 30,
**dadurch gekennzeichnet, dass**
die Führung und Kontrolle des Bauteils (1) oder der Druckerzeuger (25, 25', 25", 25"', 25'''') durch eine CNC-Maschine erfolgt.

41. Verfahren nach Anspruch 11,
**dadurch gekennzeichnet, dass**
das Verfahren mit einer Turbinenschaufel (13) durchgeführt wird, die in einem Befestigungsbereich (16) eine gekrümmte Oberfläche (4), insbesondere eine tannenbaumähnliche oder schwalbenschwanzähnliche Struktur aufweist.

42. Vorrichtung zur Erzeugung von Druckeigenspannung in einem Bauteil (1, 13),
die zumindest einen Druckerzeuger (25, 25', 25 ") aufweist,
**dadurch gekennzeichnet, dass**
die Vorrichtung (2) zumindest zwei Druckerzeuger (25, 25'), insbesondere Kugelstrahldüsen (25) aufweist,
deren Parameter unterschiedlich einstellbar sind.

43. Vorrichtung nach Anspruch 42,
**dadurch gekennzeichnet, dass**
die Vorrichtung (2) drei Druckerzeuger (25, 25', 25'') aufweist.

44. Vorrichtung nach Anspruch 42,
**dadurch gekennzeichnet, dass**
als Parameter einer Kugelstrahldüse das Material der Kugeln (28) und/oder die Größe der Kugeln (28) und/oder ein Stahldruck und/oder ein Winkel zwischen Druckerzeuger (25, 25', 25'') und der zu bestrahlenden Oberfläche (4) einstellbar ist.

45. Vorrichtung nach Anspruch 42 bis 44,
**dadurch gekennzeichnet, dass**
die Vorrichtung (2) eine Verschiebeeinrichtung, insbesondere eine CNC-Maschine aufweist,
mittels derer das Bauteil (1, 13) und/oder der zumindest eine Druckerzeuger (25, 25', 25'') gegeneinander verfahren werden kann.
